# EUROPÄISCHE PATENTANMELDUNG

(11) **EP 4 552 730 A1**
(43) Veröffentlichungstag der Anmeldung: **14.05.2025**
(21) Anmeldenummer: 24210924.7
(22) Anmeldetag: 05.11.2024
(51) Int. Cl.: B01D 53/26, B01D 45/12

(54) **VORRICHTUNG UND VERFAHREN ZUR ENTFEUCHTUNG VON GASEN UND SYSTEM MIT EINER SOLCHEN VORRICHTUNG**

(30) Priorität: 13.11.2023 DE 102023131483
(71) Anmelder: MAFAC E. Schwarz GmbH & Co. KG, 72275 Alpirsbach (DE)
(72) Erfinder: SCHWARZ, Joachim, 72250 Freudenstadt (DE); DANNER, Jonas, 72175 Dornhan (DE); SCHAAL, Stefan, 72280 Dornstetten (DE)
(74) Vertreter: Westphal, Mussgnug & Partner, Patentanwälte mbB

(57) **Zusammenfassung**

Beschrieben werden eine Vorrichtung zur Entfeuchtung von Gasen, ein System mit einer solchen Vorrichtung und ein Verfahren zur Entfeuchtung von Gasen. Die Vorrichtung umfasst einen Behandlungsbehälter (10) mit einem oberen Ende (11), einem unteren Ende (12) und einem seitlich an dem Behandlungsbehälter (1) angeordneten Einlass (21); mehrere konzentrische Kanäle (4a, 4b, 4c, 4d), die im Innern des Behandlungsbehälters (10) angeordnet sind, die jeweils mit der Zuführöffnung (21) in Verbindung stehen und die in Richtung des unteren Endes (12) des Behandlungsbehälter (10) offen sind; und ein Auslassrohr (6), um das die mehreren konzentrischen Kanäle (4a, 4b, 4c, 4d) angeordnet sind, das einen Einlass (61) im Bereich eines unteren Endes der konzentrischen Kanäle (4a, 4b, 4c, 4d) aufweist und das sich am oberen Ende (11) aus dem Behandlungsbehälter (10) heraus erstreckt.

## Beschreibung

Diese Beschreibung betrifft eine Entfeuchtungsvorrichtung zur Entfeuchtung von Gasen, wie beispielsweise Luft.

In verschiedenen industriellen Prozessen, wie beispielsweise bei der industriellen Teilereinigung, entstehen feuchte und - je nach Prozess - auch verunreinigte Gase.

Zur Reinigung verunreinigter Gase können Zentrifugalabscheider, sogenannte Zyklone, verwendet werden. Die DE 2 058 674 beschreibt einen solchen Zyklon zur Entstaubung von Gasen. Der Zyklon umfasst einen Behälter, der nach unten konisch zuläuft, einen seitlich an dem Behälter angeordneten Gaseinlass, einen oben an dem Behälter angeordneten Gasauslass, und einen an einem unteren Ende des Behälters angeordneten Partikelauslass.

Die DE 1 782 142 beschreibt einen Zyklon zur Abscheidung von Partikeln aus Gasen. Dieser Zyklon umfasst einen Behälter, ein von unten in den Behälter ragendes Einströmrohr für ein verunreinigtes Gas, mehrere an verschiedenen seitlichen Positionen des Behälters angeordnete Einlässe zum Zuführen eines gasförmigen Mediums, und einen oben an dem Behälter angeordneten Gasauslass.

Die DE 1 769 240 beschreibt einen Zentrifugalabscheider zum Trennen von Flüssigkeit und Gas.

Die der Erfindung zugrunde liegende Aufgabe besteht darin, eine effiziente Entfeuchtungsvorrichtung, insbesondere eine Entfeuchtungsvorrichtung auf Basis eines Zentrifugalabscheiders (Zyklons) zur Verfügung zu stellen.

Ein Beispiel betrifft eine Vorrichtung. Die Vorrichtung umfasst einen Behandlungsbehälter mit einem oberen Ende, einem unteren Ende und einem seitlich an dem Behandlungsbehälter angeordneten Einlass, und mehrere konzentrische Kanäle, die im Innern des Behandlungsbehälters angeordnet sind, die jeweils mit der Zuführöffnung in Verbindung stehen und die in Richtung des unteren Endes des Behandlungsbehälter offen sind. Die Vorrichtung umfasst außerdem ein Auslassrohr, um das die mehreren konzentrischen Kanäle angeordnet sind, das einen Einlass im Bereich eines unteren Endes der konzentrischen Kanäle aufweist und das sich am oberen Ende aus dem Behandlungsbehälter heraus erstreckt.

Beispiele werden nachfolgend anhand von Zeichnungen erläutert. Die Zeichnungen dienen dazu, bestimmte Prinzipien zu veranschaulichen, so dass nur Aspekte, die zum Verständnis dieser Prinzipien notwendig sind, dargestellt sind.
Figur 1 zeigt eine Seitenansicht einer Vorrichtung zur Prozessierung, insbesondere zur Entfeuchtung und Reinigung von Gasen;
Figur 2 zeigt eine horizontale Schnittansicht der in Figur 1 gezeigten Vorrichtung in einer Schnittebene A-A;
Figuren 3A und 3B zeigen eine perspektivische Schnittansicht der Vorrichtung;
Figuren 4A - 4D zeigen ein Beispiel einer Frischluftzuführung der Vorrichtung;
Figur 5 zeigt ein Beispiel einer festen Abdeckung der Vorrichtung;
Figur 6 zeigt eine perspektivische Ansicht einer im Inneren der Vorrichtung angeordneten Kondensationsanordnung gemäß einem Beispiel;
Figur 7 zeigt eine perspektivische Ansicht einer im Inneren der Vorrichtung angeordneten Kondensationsanordnung gemäß einem weiteren Beispiel, wobei die Kondensationsanordnung eine oder mehrere Kühlmittelleitungen umfasst;
Figur 8 zeigt schematisch ein Beispiel eines Systems mit einer Vorrichtung zur Prozessierung von Gasen und einer Behandlungsvorrichtung für Werkstücke;
Figur 9 zeigt eine Modifikation des Systems gemäß Figur 8;
Figur 10 zeigt eine Modifikation des Systems gemäß Figur 9; und
Figuren 11A - 11B zeigen ein Beispiel der Behandlungsvorrichtung.

Die Zeichnungen sind nicht maßstabsgerecht. In den Zeichnungen bezeichnen dieselben Bezugszeichen gleiche Merkmale. Selbstverständlich können die Merkmale der verschiedenen hierin beschriebenen Ausführungsbeispiele miteinander kombiniert werden, sofern nicht explizit etwas anderes angegeben ist.

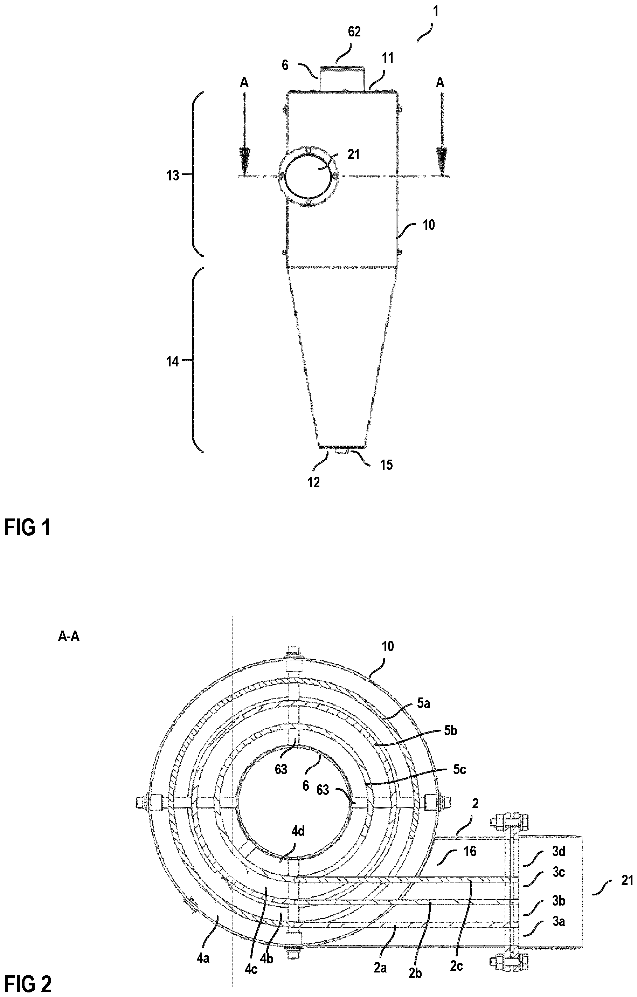

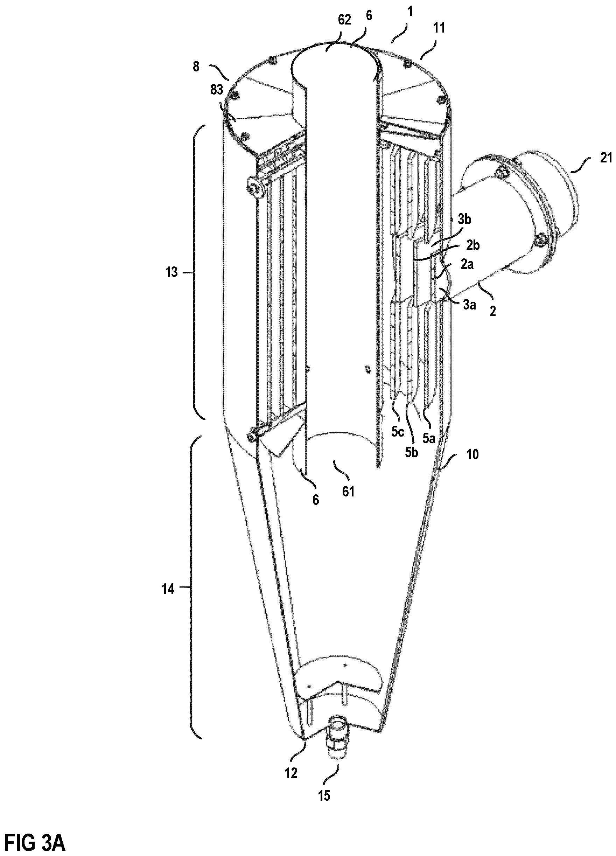

Figur 1 zeigt eine Seitenansicht einer Vorrichtung zur Prozessierung von Gasen, insbesondere zur Entfeuchtung und Reinigung von Gasen gemäß einem Beispiel. Diese Vorrichtung wird nachfolgend kurz als Entfeuchtungsvorrichtung bezeichnet, wenngleich deren Funktion nicht auf eine Entfeuchtung von Gasen beschränkt ist, sondern auch eine Reinigung des jeweiligen Gases, insbesondere eine Entfernung von Schmutzpartikeln umfassen kann. Figur 2 zeigt eine Schnittansicht der Entfeuchtungsvorrichtung gemäß Figur 1 in einer in Figur 1 dargestellten Schnittebene A-A. Die Figuren 3A - 3B zeigen eine perspektivische Schnittansicht der Entfeuchtungsvorrichtung 1 in verschiedenen Varianten.

Bezug nehmend auf die Figuren 1 - 2 und 3A - 3B umfasst die Entfeuchtungsvorrichtung 1 einen rotationssymmetrischen Behandlungsbehälter 10 mit einem oberen Ende 11, einem unteren Ende 12 und einem seitlich an dem Behandlungsbehälter 10 angeordneten Einlass 21, der nachfolgend auch als Zuführöffnung bezeichnet ist. Die Begriffe "oberes Ende 11" und "unteres Ende 12" beziehen sich darauf, dass im Betrieb der Vorrichtung der Behandlungsbehälter 10 so orientiert ist, dass der Behandlungsbehälter 10 - wie in Figur 1 dargestellt - aufrecht steht, so dass sich das obere Ende 11 in einer vertikalen Richtung oberhalb des unteren Endes 12 befindet.

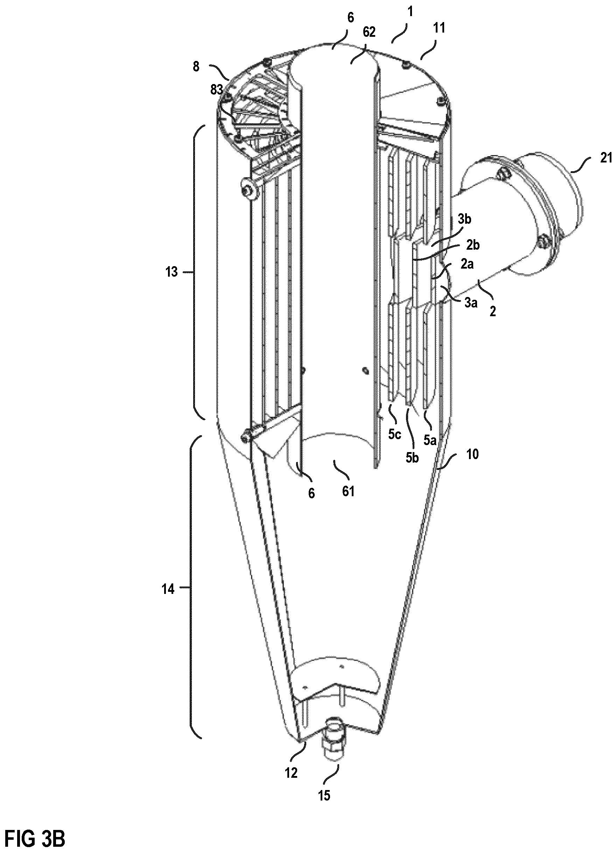

Bezug nehmend auf Figur 2 umfasst die Entfeuchtungsvorrichtung außerdem mehrere konzentrische Kanäle 4a, 4b, 4c, 4d, die im Inneren des Behandlungsbehälters 10 angeordnet sind. Diese konzentrischen Kanäle 4a - 4d stehen jeweils mit der Zuführöffnung 21 in Verbindung und sind, wie in Figur 3 dargestellt ist, in Richtung des unteren Endes 12 des Behandlungsbehälters 10 offen. Dass die konzentrischen Kanäle 4a - 4d mit der Zuführöffnung 21 in Verbindung stehen, bedeutet, dass ein über die Zuführöffnung 21 in den Behandlungsbehälter 10 eingebrachter Gasstrom in die einzelnen konzentrischen Kanäle 4a - 4d gelangt, wobei sich der Gasstrom aufteilt, so dass jeweils ein Teilstrom des über die Zuführöffnung 21 eingebrachten Gasflusses in den einzelnen konzentrischen Kanälen 4a - 4d fließt. Bei den in den Figuren 2 und 3 dargestellten Beispielen umfasst die Vorrichtung vier konzentrische Kanäle 4a - 4d. Dies ist jedoch nur ein Beispiel. Gemäß einem Beispiel sind zwischen 2 und 20, insbesondere zwischen 4 und 15 konzentrische Kanäle 4a - 4d vorgesehen.

Bezugnehmend auf die Figuren 1 - 2 und 3A - 3B umfasst die Entfeuchtungsvorrichtung 1 außerdem ein Auslassrohr 6, um das die mehreren konzentrischen Kanäle 4a - 4d angeordnet sind. Das Auslassrohr 6 umfasst einen Einlass 61 im Bereich eines unteren Endes der konzentrischen Kanäle 4a - 4d und erstreckt sich am oberen Ende 11 aus dem Behandlungsbehälter 10 heraus. Das Auslassrohr 6 und die zylindrischen Lamellen 5a - 5c können beispielsweise mittels Stegen 63 (vgl. Figur 2) an der Seitenwand des Behandlungsbehälters 10 befestigt werden.

Am unteren Ende 12 weist der Behandlungsbehälter 10 beispielsweise einen Flüssigkeitsauslass auf.

Wie in Figur 2 dargestellt ist, kann die Zuführöffnung 21 der Entfeuchtungsvorrichtung 1 durch ein Einlassrohr 2 gebildet sein, das seitlich in den Behandlungsbehälter 1 mündet. In diesem Einlassrohr 2 können mehrere Kanäle 3a - 3d gebildet sein, wobei jeder dieser Kanäle 3a - 3d in einen jeweiligen der konzentrischen Kanäle 4a - 4d im Innern des Behandlungsbehälters 1 mündet. Diese Kanäle 3a - 3d, die nachfolgend auch als langgestreckte Kanäle 3a - 3d bezeichnet werden, werden beispielsweise gebildet durch eine oder mehrere Seitenwände des Einlassrohrs 2 und durch im Innern des Einlassrohrs 2 angeordnete Stege 2a - 2c. Wie in den Figuren 1 und 3 dargestellt ist, kann das Einlassrohr 2 ein zylindrisches Einlassrohr sein. Dies ist allerdings nur ein Beispiel. Das Einlassrohr 2 könnte auch einen rechteckförmigen oder einen beliebigen anderen Querschnitt aufweisen.

Das Einlassrohr 2 ist gemäß einem Beispiel derart an dem Behandlungsbehälter 10 angeordnet, dass die langgestreckten Kanäle 3a - 3d tangential in die konzentrischen Kanäle 4a - 4d im Innern des Behandlungsbehälters 10 münden, so dass ein über die Kanäle einströmendes Gas möglichst widerstandsfrei in den konzentrischen Kanälen 4a - 4d weiterfließen kann.

Wie in Figur 2 dargestellt ist, können die konzentrischen Kanäle 4a - 4d im Inneren des Behandlungsbehälters 10 durch eine Seitenwand des Behandlungsbehälters 10, das beabstandet zu der Seitenwand angeordnete Auslassrohr 6 und mehrere zwischen der Seitenwand des Behandlungsbehälters 10 und dem Auslassrohr 6 angeordnete konzentrische zylindrische Elemente 5a - 5c gebildet sein. Die konzentrischen Elemente 5a-5c werden nachfolgend auch als zylindrische Lamellen (oder Finnen) oder zylindrische Leitbleche bezeichnet. Der Behandlungsbehälter 10, das Auslassrohr 6 und die zylindrischen Lamellen 5a - 5c bestehen beispielsweise jeweils aus einem Metall. Der Behandlungsbehälter 1 und das Auslassrohr 6 bestehen beispielsweise aus Edelstahl. Die zylindrischen Lamellen 5a - 5c bestehen beispielsweise aus einem gut thermisch leitenden Material, wie beispielsweise Aluminium, Kupfer oder Edelstahl.

Wie in den Figuren 1 oder 3A und 3B dargestellt ist, kann der Behandlungsbehälter 10 einen zylindrischen oberen Abschnitt 13 und einen konisch in Richtung des unteren Endes 12 zulaufenden unteren Abschnitt 14 umfassen. Der obere Abschnitt 13 ist hierbei zwischen dem oberen Ende 11 und dem unteren Abschnitt 14 angeordnet. Die konzentrischen Kanäle 4a - 4d, und damit die zylindrischen Lamellen 5a - 5c, sind im oberen zylindrischen Abschnitt 13 des Behandlungsbehälters 10 angeordnet. Das Auslassrohr 6 erstreckt sich in Richtung des unteren Endes 12 zumindest bis auf Höhe unterer Enden der Lamellen 5a - 5c, kann sich aber auch weiter als die unteren Enden der Lamellen 5a - 5c in Richtung des unteren Endes 12 des Behandlungsbehälters 10 erstrecken. Das heißt, der Einlass 61 des Auslassrohrs 6 kann sich in vertikaler Richtung auf Höhe der unteren Enden der zylindrischen Lamellen 5a - 5c befinden oder kann in Richtung des unteren Endes 12 des Behandlungsbehälters 10 zu den unteren Enden der zylindrischen Lamellen 5a - 5c beabstandet sein. Die "unteren Enden der zylindrischen Lamellen 5a - 5c" sind die Enden der zylindrischen Lamellen 5a - 5c, die in Richtung des unteren Endes 12 des Behandlungsbehälters 10 angeordnet sind.

"Obere Enden der zylindrischen Lamellen 5a - 5c" sind solche Enden, die in Richtung des oberen Endes 11 des Behandlungsbehälters 10 angeordnet sind. Gemäß einem Beispiel ist das Einlassrohr 2 in vertikaler Richtung beabstandet zu den oberen Enden und beabstandet zu den unteren Enden der zylindrischen Lamellen 5a - 5c angeordnet. Das Einlassrohr 2 ist beispielsweise in etwa im oberen Drittel des oberen Abschnitts 13 des Behandlungsbehälters 10 angeordnet. Ein Abstand des Zuführrohrs 2 zum oberen Ende beträgt damit beispielsweise zwischen dem 0,2-fachen und dem 0,6-fachen des Abstands des Zuführrohrs 2 zum unteren Ende der zylindrischen Lamellen 5a - 5c.

Die Höhe des oberen Abschnitts 13, welches die Abmessung des oberen Abschnitts 13 in der vertikalen Richtung ist, beträgt beispielsweise zwischen 30 cm und 100 cm, insbesondere zwischen 40 cm und 80 cm. Eine Höhe des unteren Abschnitts 14, welches die Abmessung des unteren Abschnitts 14 in der vertikalen Richtung ist, liegt beispielsweise im gleichen Bereich wie die Höhe des oberen Abschnitts 13. Gemäß einem Beispiel beträgt ein Verhältnis zwischen einer Höhe des oberen Abschnitts 13 und einer Höhe des unteren Abschnitts 14 zwischen 2:1 und 1:2.

Ein Durchmesser des Behandlungsbehälters 10 im oberen Abschnitt 13 beträgt beispielsweise zwischen 20 cm und 40 cm, insbesondere zwischen 25 cm und 35 cm. Ein Durchmesser des Auslassrohrs 6 beträgt beispielsweise zwischen 5 cm und 15 cm.

Die Funktionsweise der Entfeuchtungsvorrichtung 1 gemäß der Figuren 1 - 2 und 3A - 3B wird nachfolgend kurz erläutert. Wie bereits erläutert, dient die Zuführöffnung 21 dazu, ein zu entfeuchtendes und gegebenenfalls zu reinigendes Gas der Entfeuchtungsvorrichtung 1 zuzuführen. Das entfeuchtete und gegebenenfalls gereinigte Gas wird über die Auslassöffnung 62 des Auslassrohrs 6 aus der Entfeuchtungsvorrichtung 1 abgeführt. Zum Zuführen des zu entfeuchtenden Gases kann die Entfeuchtungsvorrichtung 1 an ein Rohrsystem angeschlossen werden, über welches das zu entfeuchtende Gas an die Zuführöffnung 21 der Entfeuchtungsvorrichtung 11 gelangt. Zum Abführen des entfeuchteten Gases kann ein entsprechendes Rohrsystem an den Auslass 62 des Auslassrohrs 6 angeschlossen werden. Das zu entfeuchtende Gas ist beispielsweise Luft. In diesem Fall könnte das Rohrsystem am Auslass 62 auch weggelassen werden und die entfeuchtete Luft in die Umgebung der Entfeuchtungsvorrichtung 1 abgegeben werden.

Um eine ausreichende Strömungsgeschwindigkeit des Gases innerhalb der Entfeuchtungsvorrichtung 1 zu gewährleisten, kann wenigstens eine Strömungsmaschine, wie beispielsweise ein Ventilator, ein Gebläse oder eine Pumpe vorgesehen sein. Gemäß einem Beispiel ist diese Strömungsmaschine (nicht dargestellt) am Auslass 62 der Entfeuchtungsvorrichtung 1 angeordnet, wobei diese Strömungsmaschine das entfeuchtete Gas aus der Entfeuchtungsvorrichtung 1 absaugt und dabei gleichzeitig zu entfeuchtendes Gas über die Zuführöffnung 21 in die Entfeuchtungsvorrichtung 1 einsaugt. Sofern das zu entfeuchtete Gas Luft ist, das nach dem Entfeuchten an die Umgebung abgegeben werden soll, kann die Abgabe der entfeuchten Luft an die Umgebung am Ausgang der Strömungsmaschine erfolgen.

Durch die konzentrischen Kanäle 4a - 4d wird das einströmende Gas in eine Zirkulationsbewegung gezwungen, wobei sich der feuchte Gasstrom in den einzelnen Kanälen 4a - 4d spiralförmig nach unten in den unteren Abschnitt 14 des Behandlungsbehälters 10 bewegt. Eine im Zusammenhang mit der Zirkulationsbewegung des Gases stehende Zentrifugalkraft bewirkt, dass das Gas gegen die zylindrischen Lamellen 5a - 5c gepresst wird und dort kondensiert.

Die Zirkulationsbewegung des Gases kann sich auch im unteren Abschnitt 14 des Behandlungsbehälters 10 noch fortsetzen, wobei sich die Abwärtsbewegung des zirkulierenden Gases im unteren Abschnitt 14 verlangsamt und der Gasstrom dann zentral im unteren Abschnitt 14 nach oben in Richtung des Auslassrohrs 6 weiter strömt. Die Zirkulationsbewegung des Gases kann dabei erhalten bleiben, so dass die Zirkulationsbewegung des Gases auch im Auslassrohr 6 noch vorhanden ist. Feuchtigkeitstropfen, die sich aufgrund der Kondensation an den zylindrischen Lamellen 5a - 5c und der Seitenwand des Behandlungsbehälters 10 bilden, agglomerieren und fließen/tropfen nach unten, wo die sich sammelnde Flüssigkeit über den Auslass 15 abgeführt werden kann. Die im unteren Abschnitt 14 der Entfeuchtungsvorrichtung 1 nach unten fallenden Feuchtigkeitstropfen wirken als Kondensationskeime und können so auch für Gas, das sich bereits im unteren Abschnitt 14 befindet, zu einer weiteren Entfeuchtung beitragen.

Durch die erläuterten Zentrifugalkräfte werden auch Partikel, die als Verunreinigungen in dem Gas enthalten sein können, im oberen Abschnitt 13 des Behandlungsbehälters gegen die Lamellen 5a - 5c oder die Behälterwand und im unteren Abschnitt 14 des Behandlungsbehälters gegen die Behälterwand gedrückt, von wo sie nach unten absinken und zusammen mit der sich im unteren Bereich sammelnden Flüssigkeit über den Auslass 15 ausgeleitet werden können.

Durch die zylindrischen Lamellen 5a - 5c, die den Gasstrom in mehrere Teilströme aufteilen, besitzt die Entfeuchtungsvorrichtung 1 eine große Kondensationsoberfläche, wodurch auf effiziente Weise eine Entfeuchtung des einströmenden Gases gewährleistet ist. Die Kondensationswirkung der durch die zylindrischen Lamellen 5a - 5c gebildeten Kondensationsanordnung ist hierbei umso besser, je besser diese Lamellen gekühlt werden.

Die Temperatur des zu entfeuchtenden Gases beträgt beispielsweise zwischen 30 °C und 90 °C. Für die Kühlung der Lamellen 5a - 5c gibt es verschiedene Möglichkeiten.

Gemäß einer ersten Möglichkeit wird das zuvor erläuterte Entfeuchtungsverfahren intermittierend durchgeführt. Das heißt, der Entfeuchtungsvorrichtung 1 wird für eine bestimmte Zeit ein zu entfeuchtendes Gas zugeführt, um das Gas zu entfeuchten. Danach wird für eine bestimmte Zeitdauer ein kühles Gas, wie beispielsweise kühle Luft über die Zuführöffnung 21 durch die Entfeuchtungsvorrichtung 1 geleitet, um die Lamellen 5a - 5c zu kühlen und auch für den nächsten Entfeuchtungsvorgang ein gutes Kondensationsergebnis zu erreichen. Für dieses Verfahren kann der Behandlungsbehälter 10 am oberen Ende 11 um das Auslassrohr 6 herum fest, d. h., luftdicht verschlossen sein. Die Temperatur des zugeführten kühlen Gases beträgt beispielsweise zwischen 15 °C und 25 °C.

Eine weitere Möglichkeit, die Lamellen 5a - 5c zu kühlen, besteht darin, eine Frischluftzuführung 8 am oberen Ende 11 des Behandlungsbehälters 10 vorzusehen. Eine solche Frischluftzuführung ist in den Figuren 3A und 3B dargestellt.

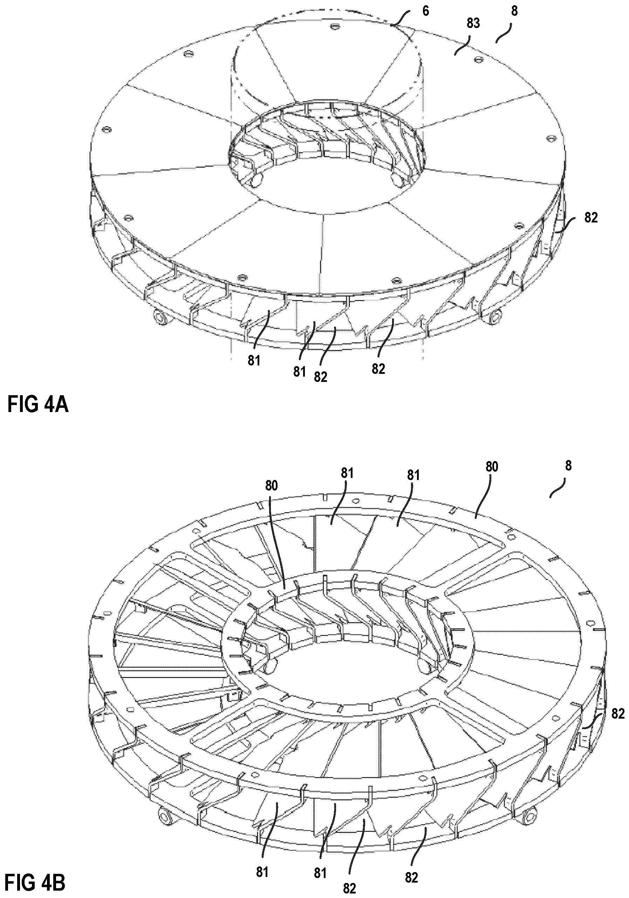

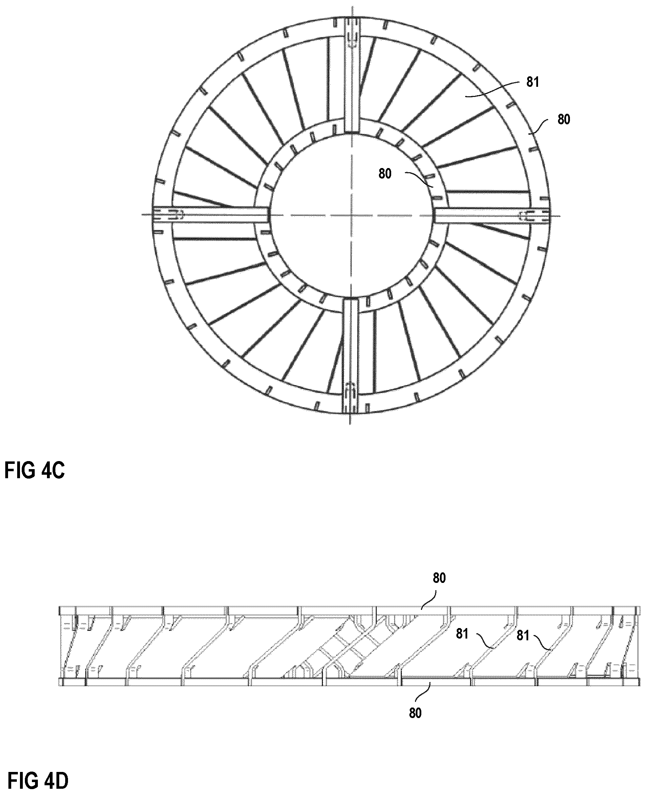

Eine Frischluftzuführung gemäß der Figuren 3A und 3B ist in den Figuren 4A - 4D im Detail dargestellt. Figur 4A zeigt eine perspektivische Ansicht der Frischluftzuführung 8; Figur 4B zeigt eine weitere perspektivische Ansicht der Frischluftzuführung 8, wobei in Figur 4B eine in Figur 4A dargestellte Abdeckung 83 nicht dargestellt ist; Figur 4C zeigt eine Ansicht von unten der Frischluftzuführung 8, wobei in Figur 4C die Abdeckung 83 ebenfalls nicht dargestellt ist; und Figur 4D zeigt eine Seitenansicht der Frischluftzuführung 8.

Wie in den Figuren 4A - 4D dargestellt ist, umfasst die Frischluftzuführung 8 Leitschaufeln 81, die durch einen Rahmen 80 gehalten sind und die sich ausgehend von dem Auslassrohr 6 (das in Figur 4A gestrichelt dargestellt ist) radial nach außen erstrecken. Zwischen den Leitschaufeln 81 sind Luftzufuhrkanäle 82 gebildet, die nach unten hin, also in Richtung des Inneren des Behandlungsbehälters 10 offen sind. Nach oben hin können die Luftzufuhrkanäle 82 je nach Anwendungszweck vollständig offen, teilweise offen oder vollständig geschlossen sein. Frischlufteinlässe, die an einem oberen Ende der Luftzufuhrkanäle 82 gebildet sind, sind nach oben gerichtet, also in der senkrechten Richtung des Behandlungsbehälters 10. Die Abdeckung 83 umfasst zu diesem Zweck mehrere ringförmige Segmente. Die Luftzufuhrkanäle 82 sind vollständig offen, wenn alle Segmente der Abdeckung 83 weggelassen sind, teilweise offen bzw. teilweise bedeckt, wenn nur einige der Segmente vorhanden und andere weggelassen sind, und vollständig geschlossen, wenn alle Segmente der Abdeckung 83 vorhanden sind. Die Luftzuführkanäle 82 sind nach oben gerichtet und ermöglichen in offenem Zustand einen Frischluftstrom vertikal von oben durch die Luftzuführkanäle 82 hindurch nach unten in den Behandlungsbehälter 10, wobei die einströmende Luft in den Luftzuführkanälen 82 umgelenkt wird und auf diese Weise zusätzlich zu einer vertikalen Bewegungskomponente eine radiale Bewegungskomponente erhält.

Vollständig geschlossene Luftzufuhrkanäle 82 sind beispielhaft in Figur 3A dargestellt. Die Segmente bilden in diesem Fall eine geschlossene Abdeckung, die alle Luftzufuhrkanäle 82 bedeckt. Ein Beispiel bei dem die Luftzufuhrkanäle 82 teilweise bedeckt sind, ist in Figur 3B dargestellt. Figur 4B zeigt die Frischluftzuführung 8 im vollständig offenen Zustand, d. h. mit weggelassener Abdeckung 83.

Es sei erwähnt, dass die Figuren 4A - 4D lediglich die Frischluftzuführung 8 und in Figur 4A zusätzlich (gestrichelt dargestellt) das Auslassrohr 6, nicht jedoch weitere Komponenten des Behandlungsbehälters 10 zeigen. Innerhalb der Frischluftzuführung 8 sind die Luftzufuhrkanäle 82 in radialer Richtung nach innen und außen hin offen. Diese radial nach innen und außen zeigenden Öffnungen der Luftzufuhrkanäle 82 werden allerdings durch die Wand des Behandlungsbehälters 10 und des Auslassrohres 6 verschlossen, wenn die Frischluftzuführung 8 am oberen Ende in den Behandlungsbehälters 10 eingesetzt ist, wie beispielsweise in den Figuren 3A und 3B dargestellt ist.

Bei dem in Figur 4A dargestellten Beispiel umfasst die Abdeckung 83 neun Segmente, die gemeinsam die Luftzufuhrkanäle 82 vollständig bedecken. Das Vorhandensein von neun Segmenten ist allerdings nur ein Beispiel. Die Anzahl der Segmente kann beliebig gewählt werden. Gemäß einem Beispiel umfasst die Abdeckung 83 der Frischluftzuführung 8 zwischen vier und 20 Segmenten. Die einzelnen Segmente können hierbei jeweils gleich groß sein, d. h. jeweils gleich große Winkelbereiche der ringförmigen Abdeckung 83 überdecken, oder können unterschiedlich groß sein, d. h. unterschiedlich große Winkelbereiche überdecken.

Die Menge an frischer Luft, die während des Betriebs pro Zeiteinheit über die Frischluftzuführung 8 in das Innere des Behandlungsbehälters 10 gelangen kann, ist unter anderem davon abhängig, wie viele der Segmente der Abdeckung 83 vorhanden sind, also an der Frischluftzuführung 8 befestigt sind, und damit die Luftzufuhrkanäle 82 bedecken. Die maximale Menge an frischer Luft wird über die Frischluftzuführung 8 pro Zeiteinheit dann zugeführt, wenn alle Segmente weggelassen sind, wenn die Frischluftzuführung 8 nach oben hin also vollständig offen ist. Keine Frischluft wird über die Frischluftzuführung 8 dann zugeführt, wenn die Abdeckung 83 vollständig geschlossen ist.

Wenn die Luftzufuhrkanäle 82 nach oben hin teilweise oder vollständig offen sind, kann Frischluft von oben in die Zufuhrkanäle 82 einströmen und kann von dort in vertikaler Richtung nach unten in die konzentrischen Kanäle 4a - 4d weiterströmen. Die über die Luftzufuhrkanäle 82 einströmende Frischluft dient hierbei zur Kühlung der zylindrischen Lamellen 5a - 5c.

Gemäß einem Beispiel ist vorgesehen, wenigstens eines der Segmente der Abdeckung 83, also eines, mehrere oder alle Segmente der Abdeckung 83, automatisiert öffnen und schließen zu können, um automatisiert die Frischluftzufuhr in dem Behandlungsbehälters 10 steuern zu können. Hierzu ist an dem wenigstens einen Segment eine automatisch betätigbare Öffnungs- und Schließvorrichtung vorgesehen, die dazu ausgebildet ist, das jeweilige Segment zu öffnen oder zu schließen. Diese Öffnungs- und Schließvorrichtung kann eine beliebige automatische Öffnungs- und Schließvorrichtung sein und umfasst beispielsweise einen pneumatischen Zylinder, einen Linearmotor oder ähnliches zum Öffnen und Schließen des jeweiligen Segments.

Gemäß einem Ausführungsbeispiel ist vorgesehen, mehrere oder alle Segmente automatisiert öffnen und schließen zu können und die Anzahl der geöffneten Segmente abhängig von der Luftfeuchtigkeit im Inneren des Behandlungsbehälters 10 einzustellen, um beispielsweise die Luftfeuchtigkeit unterhalb einer vorgegebenen oberen Schwelle zu halten. Bei diesem Beispiel ist vorgesehen, immer dann ein weiteres Segment zu öffnen, wenn die Luftfeuchtigkeit die vorgegebene Schwelle erreicht. Entsprechend ist bei einem weiteren Beispiel vorgesehen, immer dann ein weiteres Segment zu schließen, wenn die Luftfeuchtigkeit auf eine untere Schwelle absinkt, um auf diese Weise die Luftfeuchtigkeit oberhalb der unteren Schwelle zu halten.

Zur Steuerung der Öffnung und- Schließvorrichtung(en) kann eine Steuervorrichtung (nicht dargestellt) vorgesehen sein, die dazu ausgebildet ist, eine Feuchtigkeitsinformation, die die Feuchtigkeit im Inneren des Behandlungsbehälters 10 repräsentiert, von einem Sensor (nicht dargestellt) zu erhalten und abhängig von der Feuchtigkeitsinformation die Öffnung-und Schließvorrichtung anzusteuern, um auf diese Weise die Anzahl der geöffneten und geschlossenen Segmente der Abdeckung 83 einzustellen.

Die Leitschaufeln 81 stehen bezogen auf die vertikale Richtung schräg und sind so ausgerichtet, dass die einströmende Luft, wenn sie nach unten in Richtung der konzentrischen Kanäle 4a - 4d strömt, eine tangentiale und vertikale Strömungskomponente erhält, die in die gleiche Richtung geht wie tangentiale Strömungskomponenten der Teilströme des zu entfeuchtenden Gases, die in den konzentrischen Kanälen 4a - 4d fließen.

Die Frischluftzuführung durch eine Abdeckung 83 zu realisieren, die eines oder mehrere zu öffnende und zu schließende Segmente aufweist, ist lediglich ein Beispiel. Alternativ kann die Frischluftzuführung auch über wenigstens ein gesteuertes oder geregeltes Ventils erfolgen, dass beispielsweise am oberen Ende des Behandlungsbehälters 10 angeordnet ist und das im geöffneten Zustand eine Frischluftzuführung in den Behandlungsbehälter 10 ermöglicht und im geschlossenen Zustand eine solche Frischluftzufuhr unterbindet.

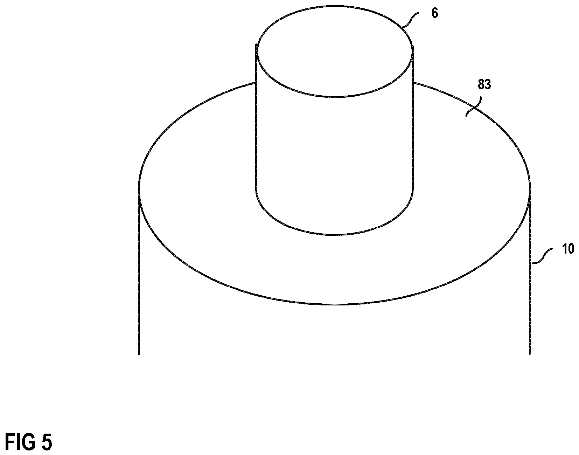

Wie oben erwähnt ist die Frischluftzuführung 8 optional, d. h., der Behandlungsbehälter 10 kann am oberen Ende auch durch eine feste Abdeckung verschlossen sein, wobei eine Kühlung der zylindrischen Lamellen 5a - 5c, wie oben erläutert, beispielsweise dadurch erfolgt, dass zeitweise kein zu entfeuchtendes Gas, sondern frische und kühle Luft über den Einlass 21 in dem Behandlungsbehälters 10 eingebracht wird. Ein Beispiel einer festen Abdeckung 84, aus der das Auslassrohr 6 hervorragt, ist in Figur 5 in einer perspektivischen Ansicht dargestellt. Zum besseren Verständnis ist in Figur 5 auch ein Teil des sich nach unten an die Abdeckung 83 anschließenden Behandlungsbehälters 10 dargestellt.

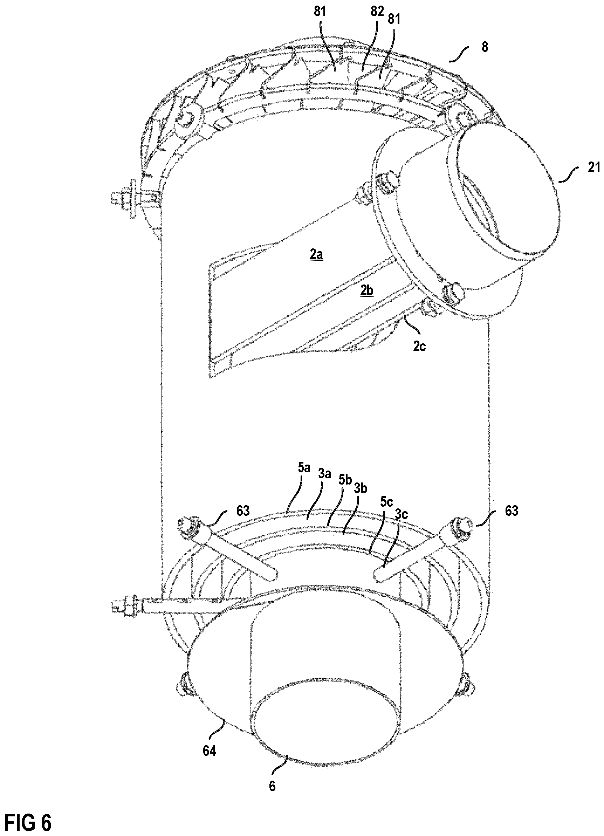

Figur 6 zeigt eine perspektivische Ansicht der Elemente, die im oberen Abschnitt 13 im Innern des Behandlungsbehälters angeordnet sind, wobei der Behandlungsbehälter 10 in Figur 6 nicht dargestellt ist. Dargestellt sind in Figur 6 die zylindrischen Lamellen 5a - 5c und die Stege 2a - 2c im Innern des Einlassrohrs 2 (das in Figur 6 ebenfalls nicht dargestellt ist). Dargestellt ist in Figur 6 (aus einer anderen Richtung als in den Figuren 4A - 4D) die optionale Frischluftzuführung 8 mit den Leitschaufeln 81 und den zwischen den Leitschaufeln 81 gebildeten Einlasskanälen.

Optional ist, wie in Figur 6 dargestellt ist, am Auslassrohr 6 unterhalb der zylindrischen Lamellen 5a - 5c eine konische, sich nach oben verjüngende Schürze 64 angeordnet, die sich ausgehend von dem Ablaufrohr 6 radial nach außen erstreckt. Ein Durchmesser dieser Schürze 64 beträgt beispielsweise zwischen 50 % und 75 % eines Innendurchmessers des Behandlungsbehälters 10. Diese Schürze 64 drängt die Gasströme, die sich von oben aus den zylindrischen Kanälen 3a - 3c nach unten bewegen, in radialer Richtung nach außen ab, so dass sich diese Gasströme über das untere Ende des Auslassrohrs 6 hinaus weiter nach unten bewegen und eine Richtungsumkehr erst beabstandet zu dem unteren Ende des Auslassrohrs 6 erfolgt. Außerdem bewirkt die Schürze 64, dass Flüssigkeitstropfen in radialer Richtung beabstandet zu dem Auslassrohr 6 nach unten tropfen und somit nicht durch den Gasstrom, der sich von unten nach oben in das Auslassrohr 6 bewegt, in das Auslassrohr 6 mitgerissen werden.

Optional ist in dem Auslassrohr 6 ein Abscheidegewebe angeordnet, das den gesamten Querschnitt oder Teile des Querschnitts des Auslassrohrs 6 einnimmt und das zumindest von einem Teil des Gasstroms in dem Auslassrohr 6 durchströmt wird. Das Abscheidegewebe dient zur finalen Agglomeration und Feinstabscheidung gegebenenfalls in dem Gasstrom mitgerissener Flüssigkeitstropfen und verhindert dass diese Flüssigkeitstropfen mit dem Gasstrom über das Auslassrohr 6 den Behandlungsbehälter 10 verlassen. Das Abscheidegewebe umfasst beispielsweise gewebte/gewirkte Fäden (3D-Gestrick) aus einem Kunststoff, einem Metall oder auch einer Naturfaser. Die Fäden sind beispielsweise so gewählt, dass sie selbst keine oder nur wenig Flüssigkeit aufnehmen oder temporär binden.

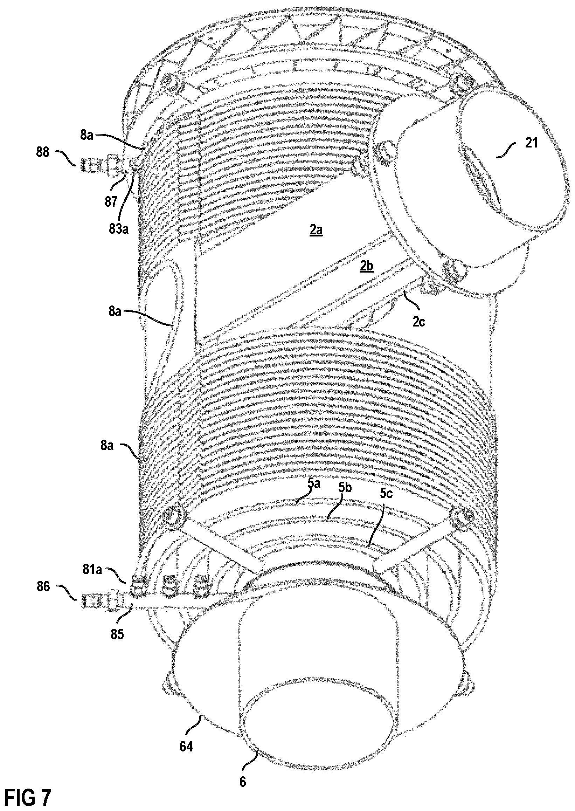

Eine weitere Möglichkeit zur Kühlung der zylindrischen Lamellen 5a - 5c besteht darin, eine oder mehrere Kühlmittelleitungen an einer oder mehreren der Lamellen 5a - 5c vorzusehen, wobei die Kühlmittelleitung von einem Kühlmittel durchflossen wird und dadurch die jeweilige Lamelle kühlt. Dies wird nachfolgend anhand von Figur 7 erläutert.

Figur 7 zeigt schematisch die im Innern des Behandlungsbehälters 10 angeordneten Lamellen 5a - 5c, wobei an einer 5a dieser Lamellen 5a - 5c eine Kühlmittelleitung 8a angeordnet ist. Selbstverständlich können an allen der Lamellen 5a - 5c entsprechende Kühlmittelleitungen angeordnet sein. Lediglich aus Gründen der Übersichtlichkeit ist in Figur 5 nur eine solche Kühlmittelleitung 8a an der äußersten 5a der Lamellen 5a - 5c dargestellt.

Die Kühlmittelleitung 8a besitzt ein erstes Ende 81a und ein zweites Ende 83a, wobei jeweils eines dieser Enden 81a, 83a als Einlass und ein anderes dieser Enden 81a, 83a als Auslass dient. Lediglich zur Erläuterung sei angenommen, dass das erste Ende 81a der Einlass und das zweite Ende 83a der Auslass der Kühlmittelleitung 8a ist. Der Einlass 81a ist an eine Zuführleitung 85 angeschlossen, über das der Kühlmittelleitung 8a Kühlmittel zugeführt wird. Diese Zuführleitung 85 besitzt einen Anschluss 86 zum Anschluss an ein entsprechendes Kühlmittelsystem. Der Auslass 83a der Kühlmittelleitung 8a ist an eine Abführleitung 87 angeschlossen, die einen Auslass 88 aufweist, der zum Anschluss an das Kühlmittelsystem dient und über den das Kühlmittel aus der Kühlmittelleitung 8a abgeführt wird.

Gemäß einem Beispiel wird das der Kühlmittelleitung 8a über das Zuführrohr 81 zugeführte und von der Kühlmittelleitung 8a über das Abführrohr 83 abgeführte Kühlmittel in einem Kreislauf geführt, wobei das über den Auslass 84 abgeführte Kühlmittel gekühlt wird, bevor es erneut über den Einlass 82 zugeführt wird. Dies ist nachfolgend noch im Detail erläutert.

Die Kühlmittelleitung 8a umfasst beispielsweise mehrere Windungen, die um die zylindrische Lamelle 5a herumgeführt sind, um eine möglichst große gekühlte Oberfläche zu erhalten. Als Kühlmittel, das durch die Kühlmittelleitung 8a fließt eignet sich ein flüssiges Kühlmittel, wie beispielsweise Wasser, oder auch ein gasförmiges Kühlmittel, wie beispielsweise Luft. Je nach verwendeten Kühlmittel besteht die Kühlmittelleitung 8a beispielsweise aus einem für das jeweilige Kühlmittel dichten Material, wie beispielsweise Metall oder Kunststoff, oder einem für das jeweilige Kühlmittel semipermeablen Material, wie beispielsweise einem semipermeablen Kunststoff. Bei Verwendung eines gasförmigen oder flüssigen Kühlmittels kann die Kühlmittelleitung 8a aus einem für das Kühlmittel dichten Material, alternativ aus einem für das Kühlmittel semipermeablen Material bestehen. Das semipermeable Material ermöglicht es dem Kühlmittel partiell in das Innere des Behandlungsbehälters zu gelangen.

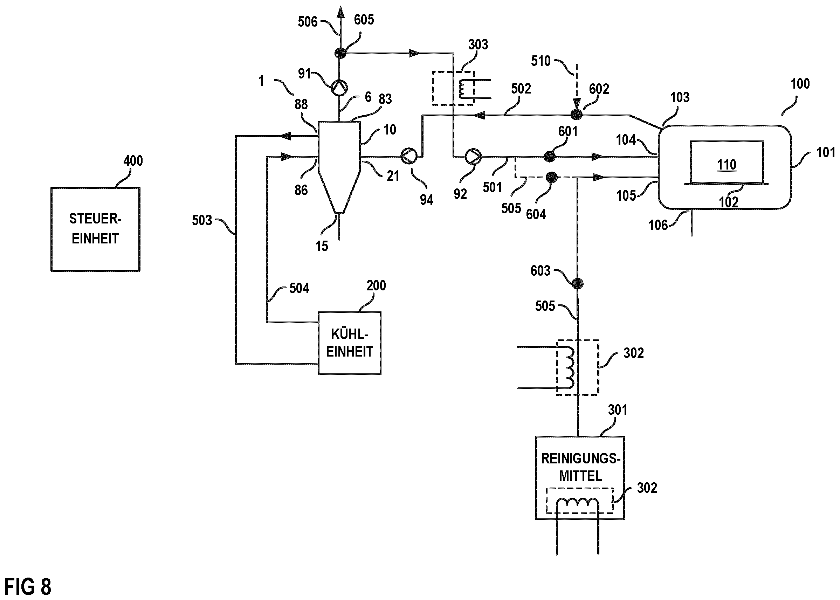

Figur 8 zeigt schematisch ein System mit einer Entfeuchtungsvorrichtung 1 gemäß einem der zuvor erläuterten Beispiele und einer Behandlungsvorrichtung 100. Die Behandlungsvorrichtung 100 ist dazu ausgebildet, Werkstücke mittels eines Reinigungsmittels zu reinigen und die gereinigten Werkstücke zu trocknen. Die Behandlungsvorrichtung 100, die in Figur 8 nur schematisch dargestellt ist, umfasst einen Behandlungsbehälter 101 und eine im Innern des Behandlungsbehälters 101 angeordnete Werkstückaufnahme 102, die dazu ausgebildet ist, die durch die Behandlungsvorrichtung 100 zu behandelnden Werkstücke aufzunehmen. Diese Werkstückaufnahme 102 ist in Figur 8 nur schematisch dargestellt.

Durch die Behandlungsvorrichtung 100 können ein oder mehrere große Werkstücke oder eine Vielzahl kleiner Werkstücke (Schüttgut) gereinigt werden, wobei Schüttgut beispielsweise durch einen Werkstückkorb aufgenommen wird, der durch die Werkstückaufnahme 102 gehalten wird. Das durch die Behandlungsvorrichtung 100 zu behandelnde Werkstück oder die durch die Behandlungsvorrichtung 100 zu behandelnden Werkstücke sind in Figur 8 schematisch dargestellt und mit dem Bezugszeichen 110 bezeichnet.

Die Bezeichnung "Werkstück" steht nachfolgend stellvertretend für ein Werkstück oder für mehrere Werkstücke. Das Reinigen des wenigstens einen Werkstücks 110 durch die Behandlungsvorrichtung 100 umfasst beispielsweise das Reinigen des wenigstens einen Werkstücks 110 mittels eines wasserbasierten Reinigungsmittels. Zumindest zum Trocknen des gereinigten Werkstücks 110 wird ein Gas, wie beispielsweise Luft verwendet. Dieses Gas wird nachfolgend auch als Prozessgas bezeichnet.

Der Behandlungsbehälter 101 umfasst einen ersten Einlass 104, der über eine erste Verbindungsleitung 501 zwischen dem Behandlungsbehälter 101 und der Entfeuchtungsvorrichtung 1 an das Auslassrohr 6 der Entfeuchtungsvorrichtung 1 angeschlossen ist, so dass das Prozessgas das durch die Entfeuchtungsvorrichtung 1 bereitgestellte entfeuchtete Gas ist.

Gemäß einem Beispiel ist die zuvor erläuterte Strömungsmaschine 91, die zum Absaugen des entfeuchtete Gases aus der Entfeuchtungsvorrichtung 1 bzw. zum Einsaugen des feuchten Gases über den Eingang 21 in die Entfeuchtungsvorrichtung 1 dient, in der ersten Verbindungsleitung 501 zwischen dem Auslassrohr 6 der Entfeuchtungsvorrichtung 1 und dem ersten Eingang 104 der Behandlungsvorrichtung 100 angeordnet.

Der Behandlungsbehälter 101 der Behandlungsvorrichtung 100 umfasst außerdem einen Prozessgasausgang 103, der an eine zweite Verbindungsleitung 502 zwischen der Behandlungsvorrichtung 100 und der Entfeuchtungsvorrichtung 1 angeschlossen ist. Die zweite Verbindungsleitung 502 ist an einem dem Prozessgasausgang 103 abgewandten Ende an den Einlass 21 der Entfeuchtungsvorrichtung 1 angeschlossen und dient dazu, feuchtes Prozessgas aus dem Behandlungsbehälter 101 als zu entfeuchtendes Gas der Entfeuchtungsvorrichtung 1 zuzuführen.

Bei dem in Figur 8 dargestellten System bilden die Entfeuchtungsvorrichtung 1 und die Behandlungsvorrichtung 100 zusammen mit den ersten und zweiten Verbindungsleitungen 501, 502 einen geschlossenen Kreislauf für das Prozessgas, das während des Trocknungsprozesses in dem Behandlungsbehälter 101 angefeuchtet wird und anschließend in der Entfeuchtungsvorrichtung 1 entfeuchtet wird. Die Strömungsmaschine 91 dient bei diesem Beispiel dazu, dass Prozessgas im Kreis zu führen. Optional kann in der Verbindungsleitung 501 zwischen der Entfeuchtungsvorrichtung 1 und dem Behandlungsbehälters 101 eine weitere Strömungsmaschine 92 vorhanden sein, die die Förderung des Prozessgases von der Entfeuchtungsvorrichtung 1 zu dem Behandlungsbehälter 101 und durch den Behandlungsbehälters 101 unterstützt.

Wie oben erläutert kann die Entfeuchtungsvorrichtung 1 eine Kühlvorrichtung zum Kühlen der zylindrischen Lamellen 5a - 5c umfassen. In diesem Fall können die Eingangs- und Ausgangsanschlüsse 86, 88 der Kühlvorrichtung über Kühlmittelleitungen 503, 504 an eine Kühleinheit 200 angeschlossen sein. Die Kühleinheit 200 ist dazu ausgebildet, Kühlmittel, das der Kühleinheit 200 über die Kühlmittelleitung 503 vom Auslass 84 der Kühlvorrichtung zugeführt ist, zu kühlen und gekühltes Kühlmittel zur Verfügung zu stellen. Die Kühleinheit 200 ist außerdem dazu ausgebildet, das gekühlte Kühlmittel dem Einlass 86 der Kühlvorrichtung über die weitere Kühlmittelleitung 504 zuzuführen. Das Kühlmittel ist beispielsweise Wasser oder eine andere geeignete Flüssigkeit, alternativ auch ein kühlendes Gas.

Wie oben erwähnt, dient die Behandlungsvorrichtung 100 auch zur Reinigung des Werkstücks 110 mittels eines Reinigungsmittels. Hierzu umfasst der Reinigungsbehälter 101 einen Reinigungsmitteleinlass 105, der dazu ausgebildet ist, über eine Reinigungsmittelleitung 505 ein wasserbasiertes Reinigungsmittel von einem Reinigungsmittelreservoir 301 zu erhalten. Das der Behandlungsvorrichtung 100 zugeführte Reinigungsmittel kann aufgeheizt werden. Hierfür ist optional eine Heizung 302 (gestrichelt dargestellt) vorhanden, die in einer Reinigungsmittelleitung 505 zwischen dem Reinigungsmittelreservoir 300 und der Behandlungsvorrichtung 100 und/oder in dem Reinigungsmittelreservoir 301 angeordnet ist und die dazu ausgebildet ist, das Reinigungsmittel aufzuheizen. Verschmutztes Reinigungsmittel kann über einen Reinigungsmittelauslass 106 aus dem Behandlungsbehälter 101 ausgeleitet werden.

Optional weist das System eine Heizung 303 (gestrichelt dargestellt) auf, die in der ersten Verbindungsleitung 501 zwischen der Entfeuchtungsvorrichtung 1 und der Behandlungsvorrichtung 100 angeordnet ist und die dazu ausgebildet ist, das aus dem Behandlungsbehälter 10 der Entfeuchtungsvorrichtung 1 abgeführte Prozessgas zu erwärmen, bevor es der Behandlungsvorrichtung 100 zugeführt wird.

Darüber hinaus kann das System verschiedene Ventile in Verbindungsleitungen aufweisen, die beispielsweise dazu dienen, das Fließen von Prozessgas oder Reinigungsmittel zu steuern. Diese Ventile sind in Figur 8 als Knoten (schwarze Kreise) in Zuführ- oder Verbindungsleitungen dargestellt. Jedes dieser Ventile besitzt mindestens zwei Ventilstellungen. Gesteuert werden die Ventilstellungen dieser Ventile durch eine Steuereinheit 400 die die Prozessabläufe in dem System steuert.

Ein erstes Ventil 601 ist beispielsweise in der ersten Verbindungsleitung 501 angeordnet, um in geöffnetem Zustand ein Fließen des Prozessgases von der Entfeuchtungsvorrichtung 1 zu der Behandlungsvorrichtung 100 zu ermöglichen und in geschlossenem Zustand ein Fließen des Prozessgases von der Entfeuchtungsvorrichtung zu der Behandlungsvorrichtung zu verhindern. Ein zweites Ventil 602 ist beispielsweise in der zweiten Verbindungsleitung 502 angeordnet, um in geöffnetem Zustand ein Flie-ßen des Prozessgases von der Behandlungsvorrichtung 100 zu der Entfeuchtungsvorrichtung 1 zu ermöglichen und in geschlossenem Zustand ein Fließen des Prozessgases von der Behandlungsvorrichtung 100 zu der Entfeuchtungsvorrichtung 1 zu verhindern.

Gemäß einem Beispiel ist ein drittes Ventil 603 in der Zuführleitung 505 für das Reinigungsmittel zu der Behandlungsvorrichtung 100 vorgesehen, das in geöffnetem Zustand ein Fließen des Reinigungsmittels von dem Reinigungsmittelreservoir 301 in den Behandlungsbehälter 101 der Behandlungsvorrichtung 100 ermöglicht und in geschlossenem Zustand ein Fließen des Reinigungsmittels in den Behandlungsbehälters 101 verhindert.

Optional gibt es in dem System eine Verbindungsleitung 505 von der ersten Verbindungsleitung 501 zu dem Reinigungsmitteleinlass 105, die ein weiteres Ventil 604 aufweist. Bei geöffnetem weiteren Ventil 604 wird über diese Verbindungsleitung 505 dem Reinigungsmitteleinlass 105 Prozessgas zugeführt, um auf diese Weise dem Behandlungsbehälter 101 über den Reinigungsmitteleinlass 105 alternativ (bei geschlossenem ersten Ventil 601) oder zusätzlich (bei geöffnetem ersten Ventil 601) Prozessgas zuzuführen. Bei geöffnetem weiteren Ventil 604 ist das dritte Ventil 603 beispielsweise geschlossen, um zu verhindern, dass dem Reinigungsmitteleinlass 105 gleichzeitig Prozessgas und Reinigungsmittel zugeführt werden.

Optional ist in der ersten Verbindungsleitung 501 ein weiteres Ventil 605 vorhanden, das an eine Abluftleitung 506 angeschlossen ist und das dazu ausgebildet ist, Prozessgas in der ersten Verbindungsleitung 501, das vom Ausgang 6 der Entfeuchtungsvorrichtung 1 erhalten wird, entweder in der ersten Verbindungsleitung 501 weiter in Richtung des Prozessgaseinlasses 104 und/oder 105 der Behandlungsvorrichtung 100 zu leiten oder über die Abluftleitung 506 in die Umgebungsluft abzugeben. Frischluft kann dem Behandlungsbehälter 10 der Entfeuchtungsvorrichtung 1 beispielsweise über die zuvor erläuterte Frischluftzuführung 83 (in Figur 8 nicht im Detail dargestellt) zugeführt werden.

Optional umfasst das System gemäß Figur 8 eine Vakuumpumpe 94, die in der Verbindungsleitung 502 zwischen dem Prozessgasauslass 103 des Behandlungsbehälters 101 und dem Eingang 21 der Entfeuchtungsvorrichtung 1 angeordnet ist. Die Vakuumpumpe 94 ist dazu ausgebildet, ein Vakuum in dem Behandlungsbehälter 101 zu erzeugen, um so einen Vakuumtrocknungsprozess zu ermöglichen. Details eines solchen Vakuumtrocknungsprozesses sind weiter unten noch erläutert.

Um durch die Vakuumpumpe 94 ein Vakuum in dem Behandlungsbehälter 101 zu erzeugen, ist das Ventil 601 in der Verbindungsleitung 501 geschlossen und ist das optionale Ventil 604 in der optionalen Verbindungsleitung 505 geschlossen, sodass über die Einlässe 104, 105 keine Luft in den Behandlungsbehälter 101 nachströmen kann. Das durch die Vakuumpumpe 94 aus dem Behandlungsbehälter 101 abgeführte Prozessgases wird in der Entfeuchtungsvorrichtung 1 entfeuchtet, und das entfeuchtete Prozessgas wird über die Strömungsmaschine 91, das Ventil 605 und die Abluftleitung 506 an die Umgebung abgegeben. Wenn das Ventil 601 und das optionale Ventil 604 geöffnet sind und wenn sich das Ventil 605 in einer Ventilstellung befindet, in der das entfeuchtete Prozessgases in einem Kreislaufprozess in den Behandlungsbehälter 101 zurückgeführt wird, arbeitet die Vakuumpumpe 94 weiter in dem Kreislauf. Die Vakuumpumpe 94 ist dann allerdings nicht in der Lage, ein Vakuum zu erzeugen, da permanent frisches Prozessgases über den Einlass 104 und optional den Einlass 105 in den Behandlungsbehälter 101 nachströmt.

Wie oben ausgeführt ist, kann eine Kühlung der Lamellen der Entfeuchtungsvorrichtung 1 entweder über eine Frischluftzufuhr am oberen Ende des Behandlungsbehälters 10 der Entfeuchtungsvorrichtung 1 erfolgen oder kann durch einen intermittierenden Prozess erfolgen, in welchem der Entfeuchtungsvorrichtung 1 über den Eingang 21 abwechselnd zu entfeuchtendes Prozessgases und trockenes kühlendes Gas zugeführt wird. Für einen solchen intermittierenden Prozess kann das Ventil 602 in der Verbindungsleitung 502 so realisiert sein, dass es außer einem geöffneten Zustand, in dem es den Prozessgasauslass 103 mit dem Eingang 21 der Entfeuchtungsvorrichtung 1 verbindet und einem geschlossenen Zustand, in dem es den Prozessgasauslass 103 von dem Eingang 21 der Entfeuchtungsvorrichtung 1 trennt, einen weiteren Zustand annehmen kann, in dem es den Eingang 21 der Entfeuchtungsvorrichtung 1 mit einer Frischluftleitung 510 verbindet. In diesem weiteren Zustand führt das Ventil 602 über die Verbindungsleitung 502 dem Eingang 21 der Entfeuchtungsvorrichtung 1 Frischluft zum Kühlen der Lamellen der Entfeuchtungsvorrichtung 1 zu. Die dabei erwärmte Frischluft wird über den Auslass 6, das Ventil 605 und die Abluftleitung 506 an die Umgebung abgegeben.

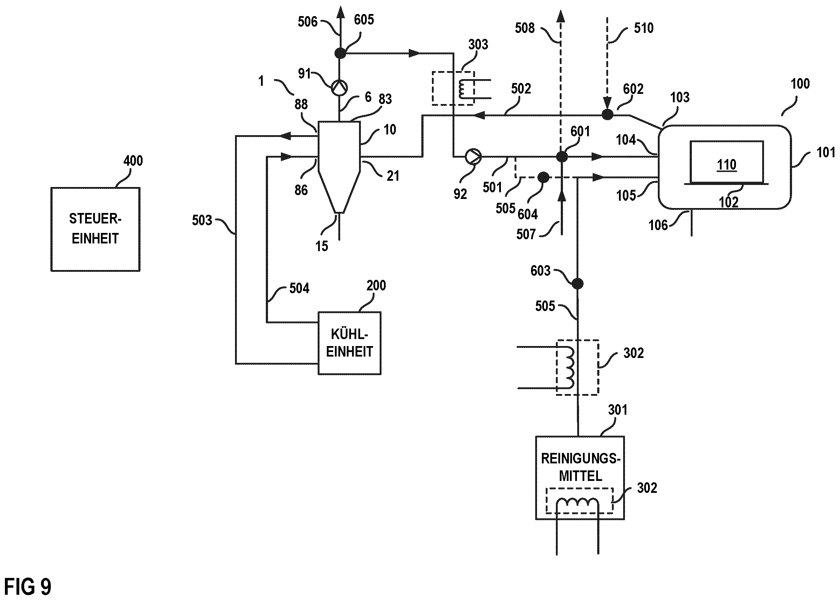

Figur 9 zeigt eine Modifikation des in Figur 8 dargestellten Systems. Das in Figur 9 dargestellten System umfasst im Vergleich zu dem System gemäß Figur 8 zusätzlich einen Drucklufteingang 507, der dazu ausgebildet ist, Druckluft zu erhalten. Die Druckluft wird beispielsweise durch einen Kompressor (nicht dargestellt) zur Verfügung gestellt. Der Drucklufteingang 507 kann an den Prozessgaseinlass 104 und/oder den Reinigungsmitteleinlass 105 gekoppelt werden, um Druckluft in den Behandlungsbehälter 101 einzubringen.

Bei dem in Figur 8 dargestellten Beispiel kann der Drucklufteingang 507 an den Prozessgaseinlass 104 gekoppelt werden. Hierzu ist der Prozessgaseinlass 507 an das erste Ventil 601 angeschlossen. Das erste Ventil 601 ist bei diesem Beispiel derart ausgebildet, dass es drei unterschiedliche Ventilstellungen aufweisen kann: (1) Eine erste Ventilstellung, bei der der Prozessgaseinlass 104 geschlossen ist, also von der Verbindungsleitung 501 mit der Strömungsmaschine 92 und von dem Drucklufteingang 507 getrennt ist. Diese Ventilstellung entspricht dem oben erläuterten geschlossenen Zustand des ersten Ventils 601. (2) Eine zweite Ventilstellung, bei der das erste Ventil 601 den Prozessgaseinlass 104 mit der Verbindungsleitung 501, nicht aber dem Drucklufteingang 507 verbindet. (3) Eine dritte Ventilstellung, bei der das erste Ventil 601 den Prozessgaseinlass 104 mit dem Drucklufteingang 507, nicht jedoch der Verbindungsleitung 501 verbindet.

Bei dem in Figur 9 dargestellten System kann außer dem zuvor anhand von Figur 8 erläuterten Entfeuchtungsprozess, bei dem das zu entfeuchtende Gas in einem Kreislauf von dem Behandlungsbehälter 101 zu der Entfeuchtungsvorrichtung 10 und zurück zu dem Behandlungsbehälter 101 geführt wird, ein weiterer Entfeuchtungsprozess durchgeführt werden. Bei diesem Entfeuchtungsprozess wird Druckluft über den Drucklufteingang 507 zugeführt. Außerdem befindet sich das erste Ventil 601 in der dritten Ventilstellung, sodass zugeführte Druckluft über den Prozessgaseinlass 104 in den Behandlungsbehälter 101 gelangt und angefeuchtet wird. Das zweite Ventil 602 ist geöffnet, sodass die angefeuchtete Druckluft über den Prozessgasauslass 101 und die Verbindungsleitung 502 in die Entfeuchtungsvorrichtung 10 gelangt, wo sie entfeuchtet wird. Die aus der Entfeuchtungsvorrichtung 10 abgeführte entfeuchtete Abluft gelangt bei diesem Prozess über die Strömungsmaschine 91, das weitere Ventil 605 und die Abluftleitung 506 in die Umgebungsluft. Dieser weitere Entfeuchtungsprozess ist also kein Kreislaufprozess.

Die Druckluft wird über den Drucklufteinlass 507 beispielsweise intermittierend (stoßweise) zugeführt und kann beispielsweise als Impulsblasprozess bezeichnet werden. Der Impulsblasprozess wird beispielsweise durchgeführt unmittelbar nachdem der Reinigungsprozess in dem Behandlungsbehälter 101 beendet wurde, also dann, wenn die Luft in dem Behandlungsbehälters 101 maximal angefeuchtet ist. Die Dauer des Impulsblasprozesses liegt beispielsweise zwischen einigen Sekunden und einer Minute, wie beispielsweise zwischen 10 und 30 Sekunden. Der zuvor anhand von Figur 8 erläuterte Kreislaufprozess dauert beispielsweise einige Minuten, wie beispielsweise zwischen 8 und 12 Minuten.

Optional umfasst das System gemäß Figur 9 eine weitere Abluftleitung 508, die an das erste Ventil 601 angeschlossen ist. Bei diesem Beispiel ist das erste Ventil 601 dazu ausgebildet, eine vierte Ventilstellung anzunehmen, bei der das erste Ventil 601 die Verbindungsleitung 501 mit der weiteren Abluftleitung 508 verbindet und den Prozessgaseinlass 104 von der Verbindungsleitung 501 und dem Drucklufteingang 507 trennt. Bei diesem Beispiel ist ein weiterer Entfeuchtungsprozess bzw. Trocknungsprozesses möglich, der nachfolgend als Vakuumtrocknung bezeichnet wird. Bei diesem Prozess befindet sich das erste Ventil 601 in der vierten Ventilstellung, die die Abluftleitung 508 mit der Verbindungsleitung 501 und der Strömungsmaschine 92 verbindet. Das zweite Ventil 602 ist geöffnet und das Ventil 605 am Ausgang 6 der Entfeuchtungsvorrichtung 10 befindet sich in einer Ventilstellung, die den Ausgang 6 der Entfeuchtungsvorrichtung 10 mit der Strömungsmaschine 92 verbindet. Bei diesem Prozess saugt wenigstens eine der beiden Strömungsmaschinen 91, 92 Luft über den Prozessgasauslass 103 aus dem Behandlungsbehälter 101 ab und erzeugt ein Vakuum in dem Behandlungsbehälters 101. Die Abdeckung 83 der Entfeuchtungsvorrichtung 10 ist hierbei entweder geschlossen oder allenfalls so weit geöffnet, dass weniger Luft nachströmen kann als durch die wenigstens eine Strömungsmaschine 91, 92 aus dem Behandlungsbehälters 101 abgesaugt wird. Hierdurch ist sichergestellt, dass ein Vakuum in dem Behandlungsbehälters 101 erzeugt bzw. aufrechterhalten wird.

Der Vakuumtrocknungsprozess dauert beispielsweise einige Minuten, wie zum Beispiel zwischen 3 und 5 Minuten und ist dazu geeignet, die Luft in dem Behandlungsbehälter 101 bis auf eine geringe Restfeuchte, wie beispielsweise eine Restfeuchte von weniger als 1 Prozent zu entfeuchten.

Das System gemäß Figur 9 kann dahingehend modifiziert werden, dass der Drucklufteingang 507 weggelassen wird, die weitere Abluftleitung 508 allerdings beibehalten wird. Durch ein solches System kann der anhand von Figur 8 erläuterte Kreislaufprozess und der Vakuumtrocknungsprozess durchgeführt werden.

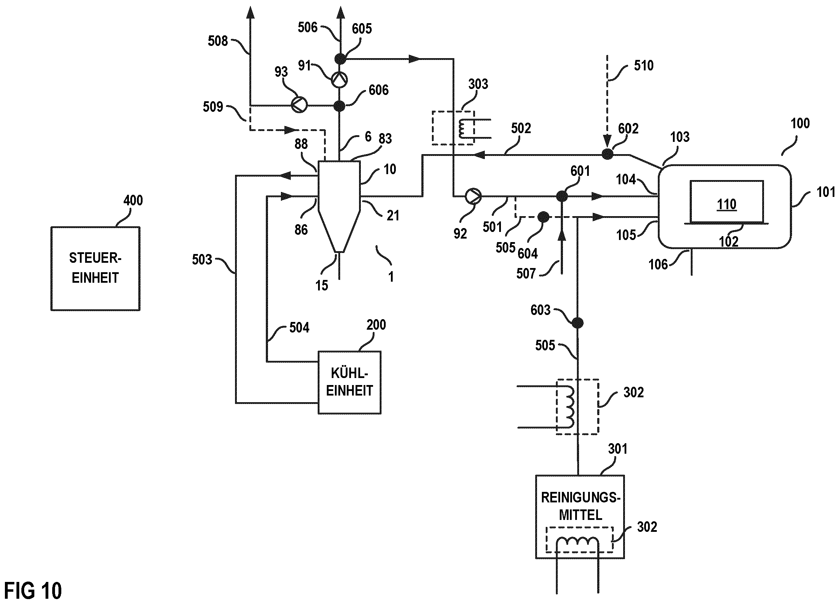

Figur 10 zeigt eine Modifikation des in Figur 9 dargestellten Systems. Bei dem in Figur 10 dargestellten System ist die weitere Abluftleitung 508 über eine Vakuumpumpe 93 und ein weiteres Ventil 606 an das Auslassrohr 6 der Entfeuchtungsvorrichtung 10 angeschlossen. Das weitere Ventil 606 hat wenigstens zwei Ventilstellungen: (1) Eine erste Ventilstellung, bei der das weitere Ventil 606 das Auslassrohr 6 der Entfeuchtungsvorrichtung 10 mit der weiteren Abluftleitung 508 verbindet, und (2) eine zweite Ventilstellung, bei der das weitere Ventil 606 das Auslassrohr 6 der Entfeuchtungsvorrichtung 10 mit der ersten Strömungsmaschine 91 verbindet. Die Vakuumpumpe 93 ist in der Lage, einen niedrigeren Druck in dem Behandlungsbehälter 101 als die beiden zuvor erläuterten Strömungsmaschinen 91, 92 zu erzeugen. Bei einem Vakuumtrocknungsprozess, der mittels dem System gemäß Figur 10 durchgeführt werden kann, trennt das erste Ventil 601 den Prozessgaseinlass 104 von der Verbindungsleitung 501 und dem optionalen Drucklufteingang 507 und verbindet das weitere Ventil 606 das Auslassrohr 6 der Entfeuchtungsvorrichtung 10 mit der Vakuumpumpe 93, sodass die Vakuumpumpe 93 über den Prozessgasauslass 103, die Verbindungsleitung 502 und die Entfeuchtungsvorrichtung 10 ein Vakuum in dem Behandlungsbehälter 101 erzeugt.

Optional ist vorgesehen, einen Teil des Prozessgases in der Abluftleitung 508 über eine Verzweigung und eine weitere Verbindungsleitung 509 (gestrichelt dargestellt) der gesteuerten oder geregelten Frischluftzuführung 83 der Entfeuchtungseinheit 10 zuzuführen. Mittels einer derartigen Prozessgas-Rückführung kann die Entfeuchtungsqualität der Abluft effizient gesteigert werden.

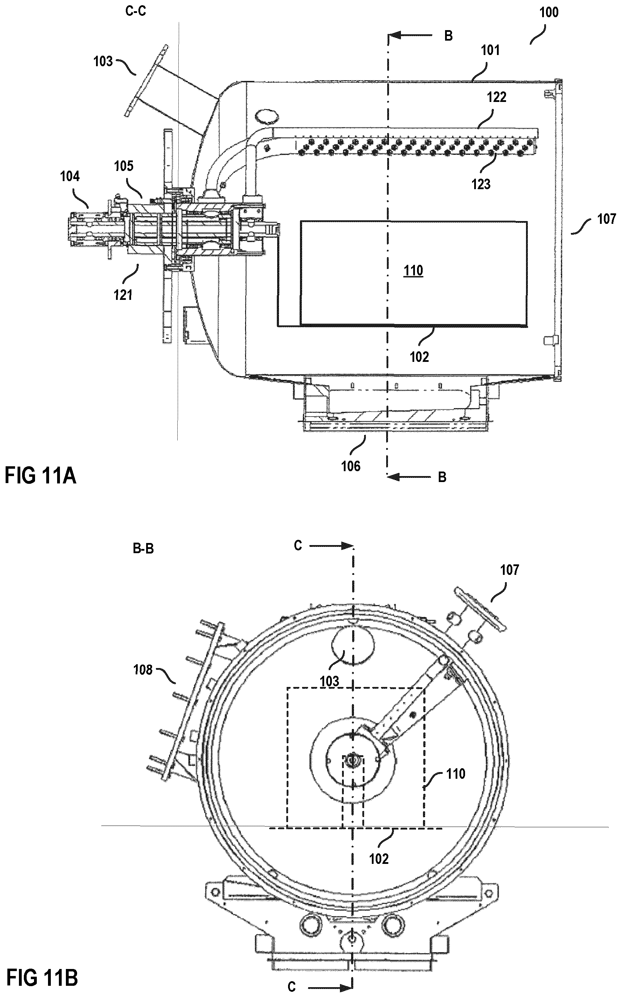

Die Figuren 11A - 11B zeigen ein Beispiel der Behandlungsvorrichtung 100 weiter im Detail. Figur 11A zeigt einen Querschnitt des Behandlungsbehälters 101 in einer Schnittebene C-C und Figur 11B zeigt einen Querschnitt des Behandlungsbehälters 101 in einer Schnittebene B-B.

Bei dem in den Figuren 11A - 11B dargestellten Beispiel hat der Behandlungsbehälter 101 eine im Wesentlichen zylindrische Form. An einem ersten stirnseitigen Ende des Behandlungsbehälters 101 ist eine Drehdurchführung 121 vorgesehen, die an dem Behandlungsbehälter 101 befestigt ist und die in den Behandlungsbehälter 101 in einer an dem ersten stirnseitigen Ende vorgesehenen Öffnung hineinragt. Im Innern des Behandlungsbehälters 101 sind an der Drehdurchführung 121 ein erster Düsenbalken 122 und ein zweiter Düsenbalken 123 befestigt. Der erste und der zweite Düsenbalken 122, 123 sind mittels der Drehdurchführung 121 derart drehbar gelagert, dass die beiden Düsenbalken 122, 123 um den Werkstückträger 102 und das durch den Werkstückträger 102 gehaltene Werkstück 110 rotieren können.

Die Drehdurchführung 121 umfasst einen ersten Kanal, der außerhalb des Behandlungsbehälters 101 den Prozessgaseinlass 104 bildet, der sich innerhalb der Drehdurchführung 121 ins Innere des Behandlungsbehälters 101 erstreckt und der in den ersten Düsenbalken 122 mündet. Der erste Düsenbalken 122 umfasst Auslassdüsen, die dazu ausgebildet sind, dass Prozessgas in das Innere des Behandlungsbehälters 101 abzugeben.

Die Drehdurchführung 121 umfasst außerdem einen zweiten Kanal, der außerhalb des Behandlungsbehälters 101 den Reinigungsmitteleinlass 105 bildet, der sich innerhalb der Drehdurchführung 121 ins Innere des Behandlungsbehälters 101 erstreckt und der in den zweiten Düsenbalken 123 mündet. Ein Einlass dieses Kanals befindet sich außerhalb der in Figur 9A dargestellten Zeichenebene. Der zweite Düsenbalken 123 umfasst Auslassdüsen, die dazu ausgebildet sind, das Reinigungsmittel oder das Prozessgas während einer Betriebsphase in das Innere des Behandlungsbehälters 101, insbesondere auf das Werkstück 110 abzugeben. Eine solche Drehdurchführung 121 mit im Innern des Behandlungsbehälters 101 angeordneten Düsenbalken 122, 123 ist allgemein bekannt, so dass diesbezüglich keine weiteren Ausführungen erforderlich sind.

Ein Beispiel eines Reinigungsprozesses, der mit der in den Figuren 11A - 11B dargestellten Behandlungsvorrichtung 100 durchgeführt werden kann, umfasst das Reinigen des Werkstücks 110 mittels des Reinigungsmittels, das unter Druck über die Düsen des zweiten Düsenbalken 123 auf das Werkstück 110 abgegeben wird. Mit dem Einbringen des Reinigungsmittels über die Düsen des zweiten Düsenbalken 123 kann ein Flüssigkeitsbad aus Reinigungsmittel in dem Behandlungsbehälters 101 erzeugt werden, wobei eine Flüssigkeitspegel dieses Flüssigkeitsbads beispielsweise so eingestellt wird, dass das Werkstück 110, wenn sich der Werkstückträger 102 rotierend in dem Behandlungsbehälters 101 bewegt, abwechselnd in das Flüssigkeitsbad eintaucht und einen oberhalb des Flüssigkeitsbad gebildeten Gasraum passiert.

In dem Gasraum oberhalb des Flüssigkeitsbads kann gemäß einem Beispiel ein Vakuum erzeugt werden. Die Erzeugung des Vakuums erfolgt über den Prozessgasauslass 103 und eine der an den Prozessgasauslass 103 angeschlossene Vakuumpumpe oder Strömungsmaschine in der gleichen Weise in der bei dem zuvor erläuterten Vakuumtrocknungsprozess ein Vakuum in dem Behandlungsbehälter erzeugt wird.

Das bei der Herstellung des Vakuums in dem Behandlungsbehälters abgesaugte Prozessgas wird in gleicher Weise wie bei dem Vakuumtrocknungsprozess in der Entfeuchtungsvorrichtung 1 entfeuchtet. Das entfeuchtete Prozessgas wird anschließend in gleicher Weise wie bei dem Vakuumtrocknungsprozess an die Umgebung abgegeben.

Zur Trocknung des Werkstücks 110 wird die Abgabe von Reinigungsmittel über den zweiten Düsenbalken 123 beendet und das im Behandlungsbehälters 101 befindliche Reinigungsmittel wird über den Reinigungsmittelauslass 106 abgelassen. Außerdem wird Prozessgas, wie beispielsweise Luft, unter Überdruck über die Düsen des ersten Düsenbalken 122 und/oder den zweiten Düsenbalken 123 auf das Werkstück 110 abgegeben. Das während des Trocknungsprozesses entstehende feuchte Prozessgas wird über den Prozessgasauslass 103 während des Trocknungsprozesses abgesaugt (Kreislauf).

Über eine Sichtscheibe 108 in dem Behandlungsbehälter 101 kann der Behandlungsprozess beobachtet werden.

Einige der zuvor erläuterten Aspekte sind anhand nummerierter Beispiele nachfolgend kurz zusammengefasst.

Beispiel 1. Vorrichtung, die aufweist: einen Behandlungsbehälter mit einem oberen Ende, einem unteren Ende und einer seitlich an dem Behandlungsbehälter angeordneten Zuführ-öffnung; mehrere konzentrische Kanäle, die im Innern des Behandlungsbehälters angeordnet sind, die jeweils mit der Zuführöffnung in Verbindung stehen und die in Richtung des unteren Endes des Behandlungsbehälter offen sind; und ein Auslassrohr, um das die mehreren konzentrischen Kanäle angeordnet sind, das einen Einlass im Bereich eines unteren Endes der konzentrischen Kanäle aufweist und das sich am oberen Ende aus dem Behandlungsbehälter heraus erstreckt.

Beispiel 2. Vorrichtung nach Beispiel 1, wobei die konzentrischen Kanäle gebildet sind durch: eine Seitenwand des Behandlungsbehälters, das Auslassrohr und mehrere zwischen der Seitenwand und dem Auslassrohr beabstandet zueinander angeordnete zylindrische Elemente.

Beispiel 3. Vorrichtung nach Beispiel 2, bei der eine Kühlmittelleitung an wenigstens einem der Elemente angeordnet ist.

Beispiel 4. Vorrichtung nach Beispiel 3, bei der sich die Kühlmittelleitung mehrfach um das wenigstens ein Element windet.

Beispiel 5. Vorrichtung nach einem der Beispiele 1 bis 4, bei der die Zuführöffnung durch ein Einlassrohr gebildet ist, das seitlich in den Behandlungsbehälter mündet.

Beispiel 6. Vorrichtung nach Beispiel 5, wobei in dem Einlassrohr mehrere Kanäle gebildet sind, wobei jeder der Kanäle in einen jeweiligen der konzentrischen Kanäle mündet.

Beispiel 7. Vorrichtung nach einem der Beispiele 1 bis 6, wobei der Behandlungsbehälter einen zylindrischen oberen Abschnitt und einen konisch in Richtung des unteren Endes zu-laufenden unteren Abschnitt aufweist, und wobei die konzentrischen Kanäle im oberen Ab-schnitt angeordnet sind.

Beispiel 8. Vorrichtung nach Beispiel 1, wobei ein Verhältnis zwischen einer Höhe des oberen Abschnitts und einer Höhe des unteren Abschnitts zwischen 2:1 und 1:2 beträgt.

Beispiel 9. Vorrichtung nach einem der Beispiele 1 bis 8, wobei der Behandlungsbehälter am unteren Ende einen Auslass aufweist.

Beispiel 10. Vorrichtung nach einem der Beispiele 1 bis 9, wobei der Behandlungsbehälter am oberen Ende um das Auslassrohr herum durch eine feste Abdeckung verschlossen ist.

Beispiel 11. Vorrichtung nach einem der Beispiele 1 bis 9, wobei die Vorrichtung im oberen Bereich eine Frischluftzuführung aufweist, die um das Auslassrohr angeordnet ist und die Frischlufteinlässe aufweist, die vertikal nach oben gerichtet sind.

Beispiel 12. Vorrichtung nach Beispiel 11, wobei die Frischlufteinlässe durch benachbart zueinander angeordnete Leitschaufeln gebildet sind, die sich von dem Auslassrohr radial nach außen erstrecken und die schräg gegenüber einer vertikalen Richtung angeordnet sind.

Beispiel 13. Vorrichtung nach Beispiel 11 oder 12, wobei die Frischluftzuführung eine Ab-deckung aufweist, die mehrere unabhängig voneinander zu öffnende und schließende Segmente oder ein Ventil aufweist.

Beispiel 14. Vorrichtung nach Beispiel 13, wobei wenigstens eines der Segmente oder das Ventil automatisch zu öffnen und zu schließen ist.

Beispiel 15. Vorrichtung nach einem der vorangehenden Beispiele, wobei ein Abscheidegewebe in dem Auslassrohr angeordnet ist.

Beispiel 16. Vorrichtung nach einem der Beispiele 2 bis 15, wobei die zylindrischen Elemente und das Auslassrohr über Stege an dem Behandlungsbehälter befestigt sind.

Beispiel 17. System, das aufweist: eine Vorrichtung gemäß einem der Beispiele 1 bis 16; und eine Behandlungsvorrichtung, die dazu ausgebildet ist, ein Werkstück zu reinigen und/oder zu trocknen, wobei die Behandlungsvorrichtung einen Behandlungsbehälter mit einem Prozessgaseinlass und einem Prozessgasauslass aufweist, wobei der Prozessgaseinlass an das Auslassrohr der Vorrichtung angeschlossen ist und der Prozessgasauslass an die Zuführöffnung der Vorrichtung angeschlossen ist.

Beispiel 18. System nach Beispiel 17, das weiterhin aufweist: eine Heizung, die an einer Verbindungsleitung zwischen dem Auslassrohr der Vorrichtung und dem Prozessgaseinlass der Behandlungsvorrichtung angeordnet ist und die dazu ausgebildet ist, ein die Verbindungsleitung durchströmendes Gas zu erwärmen.

Beispiel 19. System nach Beispiel 17 oder 18, wobei die Vorrichtung und die Behandlungs-vorrichtung zusammen mit Verbindungsleitungen zwischen der Vorrichtung und der Behandlungsvorrichtung ein geschlossenes System bilden.

Beispiel 20. System nach einem der Beispiele 14 bis 19, das weiterhin aufweist: eine Kühleinheit die an Kühlmittelanschlüsse der Vorrichtung angeschlossen ist.

Beispiel 21. Verfahren, das aufweist: Entfeuchten eines Gases unter Verwendung einer Vor-richtung, die aufweist: einen Behandlungsbehälter mit einem oberen Ende, einem unteren Ende und einem seitlich an dem Behandlungsbehälter angeordneten Einlass; mehrere konzentrische Kanäle , die im Innern des Behandlungsbehälters angeordnet sind, die jeweils mit der Zuführöffnung in Verbindung stehen und die in Richtung des unteren Endes des Behandlungsbehälters offen sind; ein Auslassrohr, um das die mehreren konzentrischen Kanäle angeordnet sind, das einen Einlass im Bereich eines unteren Endes der konzentrischen Kanäle aufweist und das sich am oberen Ende aus dem Behandlungsbehälter heraus erstreckt, wobei das Entfeuchten des Gases und das Zuführen des Gases über den Einlass in den Behandlungsbehälter, das Leiten des Gases durch die konzentrischen Kanäle (4a, 4b, 4c, 4d) in dem Behandlungsbehälter und das Abführen des entfeuchteten Gases über das Auslassrohr aus dem Behandlungsbehälters aufweist.

Beispiel 22. Verfahren nach Beispiel 21, das weiterhin aufweist: Zuführen des über das Auslassrohr der Vorrichtung bereitgestellten entfeuchteten Gases über eine Verbindungsleitung zu einem Prozessgaseinlass einer Behandlungsvorrichtung.

Beispiel 23. Verfahren nach Beispiel 22, wobei das zu entfeuchtende Gas an einem Prozessgasauslass der Behandlungsvorrichtung bereitgestellt wird und über eine Verbindungsleitung dem Einlass der Vorrichtung 21 zugeführt wird.

Beispiel 24. Verfahren nach Beispiel 23, wobei die Vorrichtung und die Behandlungsvorrichtung zusammen mit den Verbindungsleitungen ein geschlossenes System bilden.

Beispiel 25. Verfahren nach Beispiel 23, wobei das Verfahren weiterhin aufweist: Erzeugen eines Unterdrucks in einem Behandlungsbehälter der Behandlungsvorrichtung mittels einer Strömungsmaschine oder einer Vakuumpumpe, die an den Prozessgasauslass gekoppelt ist, und Abgegeben von Abluft der Vorrichtung an die Umgebung.

## Patentansprüche

1. Vorrichtung, die aufweist:
einen Behandlungsbehälter (10) mit einem oberen Ende (11), einem unteren Ende (12) und einer seitlich an dem Behandlungsbehälter (1) angeordneten Zuführöffnung (21);
mehrere konzentrische Kanäle (4a, 4b, 4c, 4d), die im Innern des Behandlungsbehälters (10) angeordnet sind, die jeweils mit der Zuführöffnung (21) in Verbindung stehen und die in Richtung des unteren Endes (12) des Behandlungsbehälter (10) offen sind; und
ein Auslassrohr (6), um das die mehreren konzentrischen Kanäle (4a, 4b, 4c, 4d) angeordnet sind, das einen Einlass (61) im Bereich eines unteren Endes der konzentrischen Kanäle (4a, 4b, 4c, 4d) aufweist und das sich am oberen Ende (11) aus dem Behandlungsbehälter (10) heraus erstreckt.

2. Vorrichtung nach Anspruch 1, wobei die konzentrischen Kanäle (4a, 4b, 4c, 4d) gebildet sind durch: eine Seitenwand des Behandlungsbehälters (10), das Auslassrohr (6) und mehrere zwischen der Seitenwand und dem Auslassrohr (6) beabstandet zueinander angeordnete zylindrische Elemente (5a, 5b, 5c).

3. Vorrichtung nach Anspruch 2, bei der eine Kühlmittelleitung (8a) an wenigstens einem (5a) der Elemente (5a, 5b, 5c) angeordnet ist.

4. Vorrichtung nach Anspruch 3, bei der sich die Kühlmittelleitung (8a) mehrfach um das wenigstens ein Element (5a) windet.

5. Vorrichtung nach einem der Ansprüche 1 bis 4, bei der die Zuführöffnung (21) durch ein Einlassrohr (2) gebildet ist, das seitlich in den Behandlungsbehälter (1) mündet.

6. Vorrichtung nach Anspruch 5,
wobei in dem Einlassrohr (2) mehrere Kanäle (3a, 3b, 3c, 3d) gebildet sind,
wobei jeder der Kanäle (3a, 3b, 3c, 3d) in einen jeweiligen der konzentrischen Kanäle (4a, 4b, 4c, 4d) mündet.

7. Vorrichtung nach einem der Ansprüche 1 bis 6,
wobei der Behandlungsbehälter (1) einen zylindrischen oberen Abschnitt (13) und einen konisch in Richtung des unteren Endes (12) zulaufenden unteren Abschnitt (14) aufweist, und
wobei die konzentrischen Kanäle (4a, 4b, 4c, 4d) im oberen Abschnitt (13) angeordnet sind.

8. Vorrichtung nach einem der Ansprüche 1 bis 7,
wobei der Behandlungsbehälter (1) am unteren Ende einen Auslass (15) aufweist.

9. Vorrichtung nach einem der Ansprüche 1 bis 8,
wobei der Behandlungsbehälter (10) am oberen Ende (11) um das Auslassrohr (6) herum durch eine feste Abdeckung (83) verschlossen ist.

10. Vorrichtung nach einem der Ansprüche 1 bis 8,
wobei die Vorrichtung im oberen Bereich (11) eine Frischluftzuführung (8) aufweist, die um das Auslassrohr (6) angeordnet ist und die Frischlufteinlässe aufweist, die nach oben gerichtet sind.

11. Vorrichtung nach Anspruch 10,
wobei die Frischlufteinlässe (82) durch benachbart zueinander angeordnete Leitschaufeln (81) gebildet sind, die sich von dem Auslassrohr (6) radial nach außen erstrecken und die schräg gegenüber einer vertikalen Richtung angeordnet sind.

12. Vorrichtung nach einem der vorangehenden Ansprüche,
wobei ein Abscheidegewebe in dem Auslassrohr (6) angeordnet ist.

13. System, das aufweist:
eine Vorrichtung (1) gemäß einem der Ansprüche 1 bis 13; und
eine Behandlungsvorrichtung (100), die dazu ausgebildet ist, ein Werkstück (110) zu reinigen und/oder zu trocknen,
wobei die Behandlungsvorrichtung (100) einen Behandlungsbehälter (101) mit einem Prozessgaseinlass (104, 105) und einem Prozessgasauslass (103) aufweist,
wobei der Prozessgaseinlass (104) an das Auslassrohr (6) der Vorrichtung (1) angeschlossen ist und der Prozessgasauslass (103) an die Zuführöffnung (21) der Vorrichtung (1) angeschlossen ist.

14. System nach Anspruch 13, das weiterhin aufweist:
eine Heizung (303), die an einer Verbindungsleitung (501) zwischen dem Auslassrohr (6) der Vorrichtung (1) und dem Prozessgaseinlass (104, 105) der Behandlungsvorrichtung (100) angeordnet ist und die dazu ausgebildet ist, ein die Verbindungsleitung (501) durchströmendes Gas zu erwärmen.

15. Verfahren, das aufweist:
Entfeuchten eines Gases unter Verwendung einer Vorrichtung (1) gemäß einem der Ansprüche 1 bis 13,
wobei das Entfeuchten des Gases das Zuführen des Gases über den Einlass (21) in den Behandlungsbehälter (10), das Leiten des Gases durch die konzentrischen Kanäle (4a, 4b, 4c, 4d) in dem Behandlungsbehälter (10) und das Abführen des entfeuchteten Gases über das Auslassrohr (6) aus dem Behandlungsbehälter (10) aufweist.
